Europäisches Patentamt

European Patent Office

Office européen des brevets

(11) Publication number: **0 138 433**
**B1**

# EUROPEAN PATENT SPECIFICATION

(45) Date of publication of patent specification: **16.06.87**

(51) Int. Cl.⁴: **F 16 B 19/10**

(21) Application number: **84306488.2**

(22) Date of filing: **24.09.84**

(54) **Blind rivet.**

(30) Priority: **26.09.83 US 535436**
**01.12.83 US 556987**

(43) Date of publication of application:
**24.04.85 Bulletin 85/17**

(45) Publication of the grant of the patent:
**16.06.87 Bulletin 87/25**

(84) Designated Contracting States:
**DE FR GB IT**

(56) References cited:
**AT-B- 286 033**
**GB-A-1 122 512**
**US-A-2 915 934**

(73) Proprietor: **TUCKER FASTENERS LIMITED**
**Walsall Road**
**Birmingham B42 1BP (GB)**
(84) **GB**

(73) Proprietor: **USM Corporation**
**426 Colt Highway**
**Farmington Connecticut 06032 (US)**
(84) **DE FR IT**

(72) Inventor: **Bryce, William Davidson, Jr.**
**20 Reservoir Manor Apartment 23R**
**Seymour CT 06483 (US)**

(74) Representative: **Randall, John Walter et al**
**Emhart Patents Department**
**P.O. Box 88 Ross Walk**
**Belgrave Leicester LE4 5BX (GB)**

Courier Press, Leamington Spa, England.

## Description

BACKGROUND OF THE INVENTION
Field of the Invention
This invention relates to blind rivet assemblies and particularly blind rivets which can be easily removed from the workpiece or workpieces after being installed.

Summary of the Prior Art
There are several different types of blind rivets on the market. These rivets generally comprise a hollow rivet body having a flanged head. In one type the rivet is open at both ends, and a mandrel is passed through the body with a head on a mandrel stem positioned adjacent the open end of the rivet body opposite the flanged head. Another type of blind rivet has a rivet body which is closed at the end opposite the flanged head, and the mandrel head is enveloped in the closed end of the rivet body; these are called "closed-ended rivets". With either type, the rivet body can be inserted into the opening in a workpiece wherein the flange of the rivet lies flat against the surface of the workpiece. By placing the nosepiece of a rivet setting tool adjacent the rivet flange, and by pulling on the mandrel stem, the head of the mandrel upsets the rivet body on the opposite side of the workpiece to deform the rivet and secure it within the workpiece. This process is generally known in the art as "setting" the rivet. A continued pulling of the mandrel stem will break off the mandrel head with the removed mandrel stem passing through the rivet body. In this fashion, the rivet is secured in the opening of the workpiece between the rivet flange on one side of the workpiece and the deformed rivet body on the opposite side of the workpiece from the rivet flange.

Examples of rivets of these types and tools for setting the rivets are illustrated in U. S. Patent Nos. 2,779,955; 3,254,522; 3,302,444 and 3,324,700.

In the aforementioned blind rivet devices and their application to workpieces, it is the major intention that the rivet and workpieces become permanently attached.

There are, however, some applications for such blind rivets where it is desirable to merely provide a temporary attachment between the workpieces. Therefore, it would be desirable to have an easily removable blind rivet. For example, as illustrated and discussed herein, it may be desirable to secure two metal workpieces together in a proper predetermined relation so that the workpieces could be permanently welded together. Thereafter it may be desirable to remove the temporary securing means.

It is therefore an object of this invention to provide an easily removable blind rivet having a rivet flange that is easily removable so that the rivet can be passed on through the opening in the workpiece.

In accordance with the present invention, this is accomplished by the fact that the interconnection of the flange and the body portion of the rivet has a reduced area to provide a localized area of weakness between the flange and the body portion, and by said flange having a tab means associated therewith, said tab means being adapted to be pulled by a gripping tool to remove the flange from the body portion along said localized area of weakness.

There now follows a detailed description, to be read with reference to the accompanying drawings, of two blind rivets in accordance with the invention and illustrative thereof. These illustrative rivets have been selected for description by way of example and not of limitation of the invention. Both the illustrative rivets are of the open-ended type; the invention is also applicable to closed-ended rivets.

Brief Description of the Drawings
Figure 1 is an illustration of the blind rivet assembled on a mandrel;
Figure 2 is an illustration of the assembled blind rivet and mandrel positioned through the openings in workpieces;
Figure 3 is an illustration of the blind rivet in a "set" condition in the workpieces;
Figure 4 is an illustration of the blind rivet in the workpieces with the flange of the rivet being removed;
Figure 5 is an illustration of the blind rivet with the flange removed and the rivet body passed through the openings in the workpieces;
Figure 6 is an illustration of another form of the invention shown in Figures 1—5, including a flange removing strip surrounding the rivet body;
Figure 7 is an illustration of the blind rivet of Figure 6 in a "set" condition in the workpiece; and
Figure 8 is an illustration of the blind rivet in the workpieces with the flange of the rivet being removed by pulling the flange removing strip.

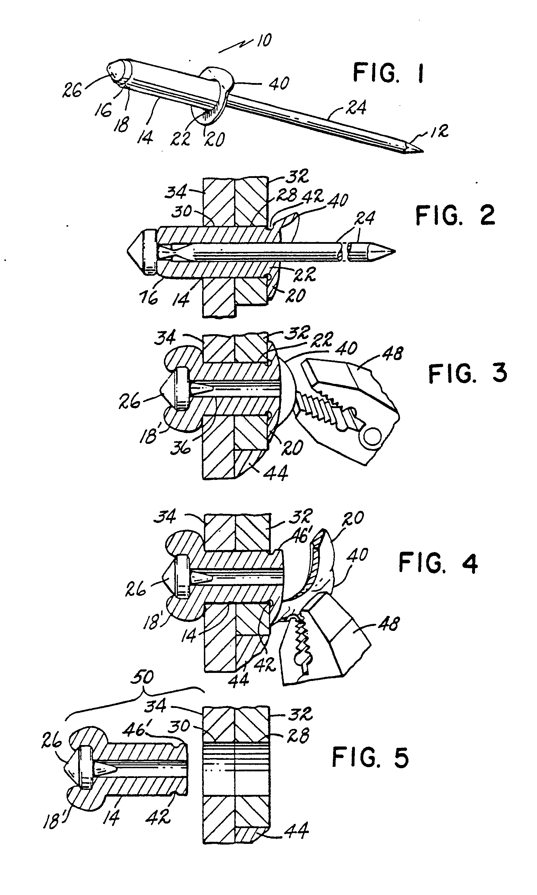

Description of the Preferred Embodiments
Attention is now directed to Figure 1 which illustrates the assembled blind rivet 10 and mandrel 12. The rivet contains a cylindrical open body portion 14 having an opening 16 on one end 18 and a flange 20 on the opposite end 22.

The mandrel 12 contains an elongated stem 24 terminating in a head portion 26. The elongated stem 24 is approximately the same diameter as the diameter of the opening 16 in rivet body portion 14. The stem 24 is adapted to pass through the opening 16 until the mandrel head portion 26 abuts the end 18 of the rivet body 14, as illustrated.

In the above described assembled condition, the blind rivet 10 is adapted, for example, to be inserted into openings 28 and 30 of workpieces 32 and 34. The openings 28 and 30 are the approximate diameter of the diameter of the body portion 14 of the rivet 10.

In the operation of setting the conventional rivet thus far described, the nosepiece (not shown) of a rivet setting tool of the type described in U.S. Patent No. 3,254,522 is placed adjacent the flange 20 of the rivet. The mandrel stem 24 is then pulled so that the mandrel head portion 26 is forced against the end 18 of rivet body 14 to upset the rivet body 14 in the conventional manner, as illustrated in Figure 3. Normally there is reduced neck area 16 between the mandrel stem 24 and head portion 26. As the stem 24 is pulled, the mandrel breaks at the neck area 36 so that the stem 24 is removed and the head portion 26 is retained in the deformed end 18' of the rivet body 14.

One of the improvements of this invention in the above described conventional rivet is the configuration of the flange 20 and its connection to the end 22 of the rivet body portion 14. As illustrated in the drawing, the flange 20 is formed with a portion formed out of the surface of the flange to present a raised tab 40. Further, the area 42 of the connection between the flange 20 and the end 22 of body portion 14 is relieved in an area of the circumference of that connection.

Another novel manner of providing an easily removable rivet assembly disclosed herein is by providing a thin strip of material surrounding the rivet body adjacent the rivet flange which can be pulled to strip the flange from the rivet body.

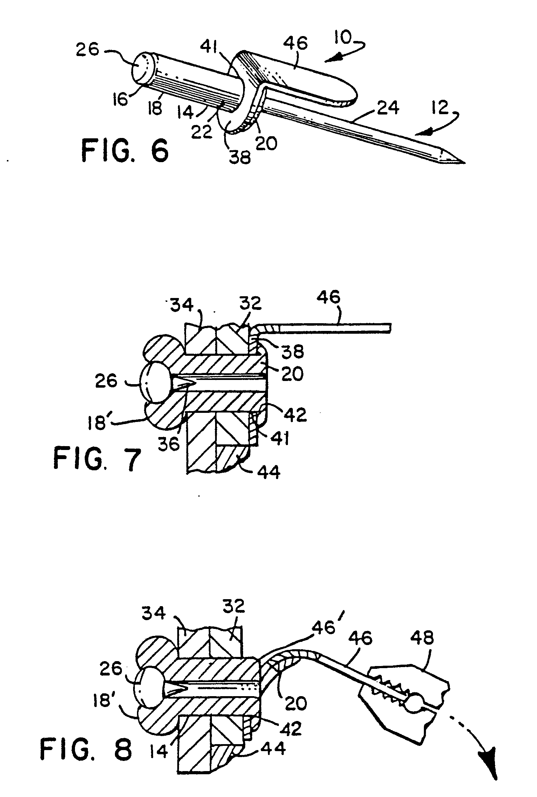

The thin strip of sheet material 38 (Figures 6 and 7) has an opening 41 surrounding the body portion 14 of the rivet and is adapted to be placed adjacent the flange 20. As illustrated in the drawing, the material 38 is positioned between the flange 20 and the workpiece and when the rivet is set, the material 38 will be securely retained between the flange and the workpiece. Attention is also directed to the undercut or relieved area 42 in the flange 20 between the flange 20 and the body portion 14 of the rivet which provides a line of weakness 46', and to an integral tab 46.

One application of an easily removable blind rivet of this invention is also illustrated in the drawing. Should it be desirable to temporarily secure two workpieces in a predetermined relationship for permanently securing them together, the novel easily removable blind rivet of this invention would be very suitable. Consider that the workpiece 32, 34 are metal members and the rivet 10 has been set in place. The workpieces 32, 34 can now be permanently secured together by a weld 44. Thereafter, the rivet 10 can be removed in the manner described by pulling the tab 46 by means of pliers 48 (see Figure 8) so as not to be a hindrance to the assembled workpieces or the surfaces on the workpieces against which additional operations may have to be performed. Additionally, it may be desirable to utilize the free openings 28, 30 for additionally bolting or otherwise fastening the assembled workpieces to other members.

Another application for the above described invention is an environment wherein it is desirable to periodically replace a worn working member secured to the workpiece. An illustration of this application of the rivet is to secure a transformer to a printed circuit board. Periodically the transformer becomes inefficient or inoperative. Once the transformer is secured to the printed circuit board or other support wherein it is being used, by the instant rivet, and the transformer becomes non-functional, it can be easily removed from the board by removing the flange 20 from the rivet 10. Thereafter, a replacement transformer can be attached to the board by another set of rivets of the type of the invention described herein.

An additional application of the blind rivet of this invention is to fix workpieces together that have been glued and hold the workpieces in place while the adhesive cures.

### Claims

1. A blind rivet assembly adapted to be placed through openings (28, 30) in workpiece (32, 34) comprising a rivet (10) having a hollow body portion (14) and a flange (20) normal to the body portion, and a mandrel (12) having a head (26) and an elongated stem (24) projecting from the rivet flange said mandrel stem being adapted upon pulling said stem, to upset said rivet body portion so that the rivet flange would rest against one surface of the workpieces and the upset rivet body against an opposite surface of the workpieces characterized by the fact that the interconnection of the flange (20) and the body portion (14) of the rivet (10) has a reduced area (42) to provide a localized area of weakness (46') between the flange (20) and the body portion (14), said flange (20) having a tab means (40; 46) associated therewith, said tab means (40; 46) being adapted to be pulled by a gripping tool (48) to remove the flange (20) from the body portion (14) along said localized area of weakness (46').

2. The blind rivet assembly of claim 1, characterized in that said tab means (40) is formed by a portion raised out of the surface of said flange (20), and adapted to be pulled by a gripping tool (48) to remove the flange (20) from the body portion (14) so that the body portion (14) can be passed through the openings (28, 30) in the workpieces (32, 34) and the rivet (10) removed from the workpieces (32, 34).

3. The blind rivet assembly of claim 1, characterized in that said tab means (46) is a separate member (38) adapted to be placed under said flange (20) and secured between said flange (20) and the workpieces (32, 34), said member (38), when being removed, adapted to strip said flange (20) from said body portion (14) so that said body portion (14) can be passed through the openings (28, 30) in the workpieces (32, 34) and the rivet (10) removed from the workpieces.

4. The blind rivet assembly of claim 3, characterized in that said separate member (38) is a thin sheet of material having an opening (41) surrounding said body portion (14) and adapted to be positioned between said flange (20) and the workpieces (32, 34).

5. The blind rivet assembly of claim 4, characterized in that said separate member (38) includes an upwardly extending tab (46) accessible to a gripping tool (48) to assist in the removal of said member (38) to strip said rivet flange (20) from said rivet body portion (14).

## Patentansprüche

1. Blindnietanordnung, welche durch Öffnungen (2, 30) in Werkstücken (32, 34) angeordnet werden kann, mit einem Niet (10), welcher einen hohlen Körperabschnitt (14) und einen Flansch (20), welcher im rechten Winkel zu dem Körperabschnitt angeordnet ist, sowie einen Dorn (12) umfaßt, welcher einen Kopf (26) und einen länglichen Schaft (24) aufweist, der sich von dem Nietflansch erstreckt, wobei der Dornschaft nach Ziehen des Schaftes den Nietkörperabschnitt so stauchen kann, daß der Nietflansch gegen eine Fläche der Werkstücke und der gestauchte Nietkörper gegen eine gegenüberliegende Fläche der Werkstücke anliegt, dadurch gekennzeichnet, daß die Verbindung des Flansches (20) und des Körperabschnittes (14) des Nietes (10) einen reduzierten Bereich (42) aufweist, um einen örtlichen Schwächungsbereich (46') zwischen dem Flansch (20) und dem Körperabschnitt (14) zu schaffen, daß der Flansch (20) einen zugeordneten Lappen (40; 46) aufweist, welcher von einem Greifwerkzeug (48) ziehbar ist, um den Flansch (20) von dem Körperabschnitt (40) längs des örtlichen Schwächungsbereiches (46') zu entfernen.

2. Blindnietanordnung nach Anspruch 1, dadurch gekennzeichnet, daß der Lappen (40) von einem Abschnitt gebildet ist, der aus der Oberfläche des Flansches (20) geformt ist und von dem Greifwerkzeug (48) gezogen werden kann, um somit den Flansch (20) von dem Körperabschnitt (14) zu entfernen, so daß der Körperabschnitt (14) sich durch die Öffnungen (28, 30) in den Werkstücken (32, 34) erstrecken kann und der Niet (10) von den Werkstücken (32, 34) entfernbar ist.

3. Blindnietanordnung nach Anspruch 1, dadurch gekennzeichnet, daß der Lappen (46) ein separates Bauteil (38) ist, welches unter dem Flansch (20) angeordnet werden kann und zwischen dem Flansch (20) und den Werkstücken (32, 34) gesichert ist, so daß dieses Beauteil (38), wenn es entfernt wird, den Flansch (20) von dem Körperabschnitt (14) strippen kann, so daß sich der Körperabschnitt (14) durch die Öffnungen (28, 30) in den Werkstücken (32, 34) erstrecken kann und der Niet (10) von den Werkstücken entfernbar ist.

4. Blindnietanordnung nach Anspruch 3, dadurch gekennzeichnet, daß das separate Bauteil (38) eine dünne Scheibe ist, welche eine Öffnung (41) aufweist, die den Körperabschnitt (14) umgibt und welches zwischen dem Flansch (20) und den Werkstücken (32, 34) positioniert werden kann.

5. Blindnietanordnung nach Anspruch 4, dadurch gekennzeichnet, daß das separate Beauteil (38) einen sich aufwärts erstreckenden Lappen (46) einschließt, welcher für ein Greifwerkzeug (48) zugängig ist, um das Entfernen des Bauteiles (38) zu unterstützen und den Nietflansch (20) von dem Nietkörperabschnitt (14) abzuziehen.

## Revendications

1. Ensemble rivet aveugle adapté pour être placé à travers des ouvertures (28, 30) ménagées ans des pièces (32, 34) qui comprend un rivet (10) possédant une partie de corps creuse (14) et une collerette (20) perpendiculaire à la partie de corps, et un mandrin (12) possédant une tête (26) et une tige allongée (24) qui fait saillie sur la collerette du rivet, la tige du mandrin étant adaptée pour déformer la partie de corps du rivet lorsqu'on tire cette tige, de manière qu la collerette du rivet repose contre une première surface des pièces et que le corps déformé du rivet repose contre une surface opposée des pièces, caractérisé par le fait que le liaison entre la collerette (20) et la partie corps (14) du rivet (10) présente une zone amincie (42) de manière à donner naissance à une zone de faiblesse localisée (46') entre la collerette (20) et la partie corps (14), la collerette (20) possédant des moyens formant languette (40; 46) associés à cette collerette, les moyens formant languette (40; 46) étant adaptés pour pouvoir être tirés au moyen d'un outil de serrage (48) pour séparer la collerette (20) de la partie corps (14) le long de ladite région de faiblesse localisée (46').

2. Ensemble rivet aveugle selon la revendication 1, caractérisé en ce que les moyens formant languette (40) sont formés par une partie redressée en dehors de la surface de ladite collerette (20), et adaptés pour pouvoir être tirés par un outil de serrage (48), pour séparer la collerette (20) de la partie corps (14), de manière qu'on puisse faire passer la partie corps (14) à travers les ouvertures (28, 30) des pièces (32, 34) et qu'on puisse enlever le rivet (10) des pièces (32, 34).

3. Ensemble rivet aveugle selon la revendication 1, caractérisé en ce que lesdits moyens formant languette (46) sont constitués par un élément séparé (38) adapté pour être placé sous la collerette (20) et fixé entre la collerette (20) et les pièces (32, 34), l'élément (38) étant adapté pour arracher la collerette (20) de la partie de corps (14) lorsqu'on l'enlève, de manière qu'on puisse faire passer la partie de corps (14) à travers une ouverture (28, 30) des pièces (32, 34) et qu'on puise séparer le rivet (10) des pièces.

4. Ensemble rivet aveugle selon la revendication 3, caractérisé en ce que l'élément séparé (38) est une mince feuille de matière présentant une ouverture (41) qui entoure la partie corps (14), et étant adaptée pour être placée entre la collerette (20) et les pièces (32, 34).

5. Ensemble rivet aveugle selon la revendication 4, caractérisé en ce que l'élément séparé (38) comprend une languette (46) s'étendant vers le haut, à laquelle on peut accéder au moyen d'une outil de serrage (48) pour favoriser l'enlèvement de l'élément (38) pour arracher la collerette (20) du rivet de la partie de corps (14) du rivet.

FIG. 1

FIG. 2

FIG. 3

FIG. 4

FIG. 5

26  41  46  10

16  18  14  24  12
22  38  20

## FIG. 6

34  32  46

38
20
26
42
18'  41
36  44

## FIG. 7

34  32
46'  46  48
26
20
18'
42
14  44

## FIG. 8